Europäisches Patentamt

European Patent Office

Office européen des brevets

(19)

(11) Veröffentlichungsnummer: **0 321 744**

**A1**

## (12) EUROPÄISCHE PATENTANMELDUNG

(21) Anmeldenummer: **88119913.7**

(22) Anmeldetag: **29.11.88**

(51) Int. Cl.4 **H04M 1/08 , H01H 13/12**

(30) Priorität: **02.12.87 DE 3740889**

(43) Veröffentlichungstag der Anmeldung:
**28.06.89 Patentblatt 89/26**

(84) Benannte Vertragsstaaten:
**CH DE GB IT LI NL**

(71) Anmelder: **Siemens Aktiengesellschaft Berlin
und München
Wittelsbacherplatz 2
D-8000 München 2(DE)**

(72) Erfinder: **Awakowicz, Erwin, Dipl.-Ing. (FH)
Richard-Pietzsch-Weg 18
D-8000 München 71(DE)**
Erfinder: **Grassl, Erwin
Drygalski-Allee 111
D-8000 München 71(DE)**

(54) **Schalteinrichtung für elektrische Geräte.**

(57) Schalteinrichtung mit in einem Gehäuseunterteil (3) untergebrachten Kontaktfedern (1, 2) und einem auf das Gehäuseunterteil (3) aufsetzbaren Gehäusedeckel (5).

Die Schalteinrichtung soll so gestaltet sein, daß auf relativ kleinem Raum eine Vielzahl von Kontaktfedersätzen untergebracht werden kann, wobei hohe Kontaktkraft und Schutz vor Verschmutzung der kontaktgebenden Bereiche gegewährleistet sein soll.

Gemäß der Erfindung besteht die mit einer feststehenden Kontaktfeder (1) zusammenarbeitende bewegbare Kontaktfeder (2) aus an einem Basissteg (20) angeordneten Außenstegen (21) sowie einem zwischen diesen befindlichen und den Schaltkontakt (22) aufweisenden Mittelsteg (23), wobei der Mittelsteg (23) in Richtung auf eine feststehende Kontaktfeder (1) vorgespannt ist und durch den senkrecht auf seinen freien Endbereich (28) einwirkenden und auf dem Gehäuseunterteil (3) verschiebbar geführten und gehalterten Gehäusedeckel (5) betätigt wird. Angewendet wird diese Schalteinrichtung z.B. bei Fernsprechgeräten.

FIG 1

EP 0 321 744 A1

## Schalteinrichtung für elektrische Geräte

Die vorliegende Erfindung beinhaltet eine Schalteinrichtung für elektrische Geräte mit zumindest einem in einem Gehäuseunterteil in Schächten untergebrachten Kontaktfedersatz und einem auf das Gehäuseunterteil aufgebrachten Gehäusedeckel, wobei der Kontaktfedersatz aus zumindest einer feststehenden und einer bewegbaren Kontaktfeder besteht und durch den Gehäusedeckel betätigt wird.

Eine derartige Schalteinrichtung ist z.B. durch DE-OS 19 27 439 bekannt, die einen Gabelumschalter für Fernsprechapparate betrifft. Bei dieser Anordnung werden die Kontaktfedern durch eine die Form eines Zylinderausschnittes aufweisende Wippe betätigt, die auf einer gekrümmten Mantelfläche mit Schaltnocken versehen ist. Diese Schaltnocken sind zwischen den waagerechtstehend auf einer gedruckten Schaltung befestigtenn Kontaktfedern zwischen zwei Endstellungen bewegbar. Bei dieser Anordnung muß der aufwendige Aufbau und der geringe Schutz vor Verstauben der Kontaktanordnung als nachteilig erachtet werden.

Bei einer weiteren bekannten Anordnung werden die Kontaktfedern über eine Drucktaste betätigt (AU-PS 512 411). Die auf einem Ansatz senkrecht zu einer Platte geführte und gegen Federkraft verschiebbare Drucktaste weist in ihrem Inneren stufenförmige Verbreiterungen auf, die bei ihrem Niederdrücken auf in der Mitte von Kontaktfedern herausgebogene Bereiche einwirken. Die Kontaktfedern sind auf einem Teil ihrer Länge in der Drucktaste in Schächten gehalten. Bei dieser Anordnung muß die wenig sichere Halterung der Kontaktfedern sowie der geringe Schutz vor Verschmutzung der kontaktgebenden Bereiche der Kontaktfedern bemängelt werden.

Der vorliegenden Erfindung liegt daher die Aufgabe zugrunde, eine Schalteinrichtung zu schaffen, bei der auf relativ kleinem Raum eine Vielzahl von Kontaktfedern sitzen untergebracht werden kann, wobei hohe Kontaktkräfte sowie Schutz vor Verschmutzung der kontaktgebenden Teile gewährleistet sein soll.

Diese Aufgabe wird dadurch gelöst, daß die bewegbare Kontaktfeder durch an einem Basissteg angeordnete Außenstege und einem zwischen diesen Außenstegen vorgesehenen und den Schaltkontakt in dessen Endbereich aufweisenden Mittelsteg gebildet ist, wobei nur die Außenstege in Schächten des Gehäuseunterteils eingespannt gehalten sind und daß der bewegbare Mittelsteg in Richtung auf die feststehende Kontaktfeder vorgespannt ist und durch den senkrecht auf sein freies Ende einwirkenden und auf dem Gehäuseunterteil verschiebbar geführten und gehaltenen Gehäusedeckel betätigt wird.

Bei dieser Schalteinrichtung ist die bewegbare Kontaktfeder lediglich mit ihren Außenstegen in Schächten des Gehäuseunterteils eingespannt gehalten, so daß der in Richtung auf die feststehende Kontaktfeder vorgespannte Mittelsteg und ein Teil des Basissteges bei Einwirken des Gehäusedeckels auf den vorgespannten Mittelweg die Schaltbewegung mitvollziehen.

Bei Auslenken des vorgespannten Mittelsteges, d.h. Abheben des Schaltkontaktes von der feststehenden Kontaktfeder, wird der Basissteg tordiert, so daß bei Verschiebung des Gehäusedeckels in die entgegengesetzte Richtung zum erneuten Schliessen der Schaltkontakte nur sehr geringe Schaltkräfte aufgewendet werden müssen. Da die Schaltkontakte sich im Inneren des auf dem Gehäuseunterteil verschiebbar geführten und gehalterten Gehäusedeckels befinden, sind sie weitgehend vor Verschmutzung sowie vor elektrischen Überschlägen geschützt, die durch statische Aufladung von Personen hervorgerufen werden können.

Die Verschiebung des Gehäusedeckels kann durch ein direkt an ihm angreifendes Betätigungsglied erfolgen. Es besteht jedoch auch die Möglichkeit, den Gehäusedeckel durch einen Schieber zu betätigen, wobei der Gehäusedeckel Schaltstege mit in deren Endbereich angeordneten Schaltnocken besitzt, die mit am Schieber vorgesehenen Keilflächen zusammenarbeiten. Dabei läßt sich durch Gestaltung der Keilflächen der Verschiebeweg des Gehäusedeckel beeinflussen.

Die Betätigung der bewegbaren Kontaktfedern kann z.B. dadurch erfolgen, daß der Gehäusedeckel eine der Anzahl der zu schaltenden Kontaktfedern entsprechende Anzahl von Nockenpaaren aufweist, die jeweils auf den T-förmig gestalteten Endbereich des Mittelsteges der Kontaktfeder einwirken. Dabei ist die feststehende Kontaktfeder im wesentlichen U-förmig gestaltet und besitzt einen zumindest einseitig mit einem Schaltkontakt versehenen Mittelsteg, wobei die Kontaktfedern in den äusseren Schenkeln weiterhin frei geschnittene Zungen aufweisen, die aus der Ebene der Kontaktfeder herausgebogen sind.

Dadurch können die feststehenden Kontaktfedern mit Preßsitz in die durch Rippen gebildeten Schächte im Unterteil eingesteckt werden. Die Außenstege der bewegbaren Kontaktfeder können weiterhin im Bereich des Basissteges stufenförmig aus der Ebene dieses Basissteges herausgebogen sein. Durch diese Gestaltung der Außenstege werden die bewegbaren Kontaktfedern ebenfalls mit Preßsitz in die Schächte des Gehäuseunterteils eingebracht. Eine formschlüssige Verbindung zwischen dem Gehäuseunterteil und dem Gehäusedeckel kann z.B. dadurch realisiert werden, daß das Gehäuseunterteil an zwei parallel zueinander verlaufenden Seitenwänden angeordnete Nasen aufweist, die in entsprechende, am Gehäusedeckel vorgesehene längliche Ausnehmungen eingreifen. Eine weitere sichere Führung des Gehäusedeckels läßt sich zusätzlich dadurch erreichen, daß das Gehäuseunterteil ein stückig mit ihm verbundene schachtartige Kammern aufweist, in die an den Schaltstegen des Gehäusedeckels angeordnete und vom Schieber abgewandte Führungsnocken eingreifen.

Die Erfindung soll im folgenden anhand eines Ausführungsbeispiels näher erläutert werden.

Es zeigen

FIG 1 eine geschnittene Seitenansicht der Schalteinrichtung längs der Schnittlinie I-I (FIG 3)

FIG 2 eine um 90° gedrehte Seitenansicht der Schalteinrichtung längs der Schnittlinie II-II (FIG 3)

FIG 3 eine geschnittene Aufsicht auf die Schalteinrichtung längs der Schnittlinie III-III (FIG 2)

FIG 4 eine geschnittene Frontansicht der Schalteinrichtung längs der Schnittlinie IV-IV (FIG 3)

FIG 5 eine geschnittene Frontansicht der Schalteinrichtung längs der Schnittlinie V-V (FIG 3).

Die in den Figuren dargestellte Schalteinrichtung besteht im wesentlichen aus einem die Kontaktfedern 1 und 2 aufnehmenden Gehäuseunterteil 3 mit einer einstückig mit ihm verbundenen Schieberführung 4 sowie einem auf dem Gehäuseunterteil 3 aufgeschnappten und verschiebbar geführten Gehäusedeckel 5, der mit dem auf der Schieberführung 4 aufgesetzten Schieber 6 verbunden ist. Das Gehäuseunterteil 3 besitzt Ansätze 7, mit denen es Durchbrüche 8 einer Leiterplatte 19 durchgreift und somit die Schalteinrichtung auf der Leiterplatte 19 fixiert.

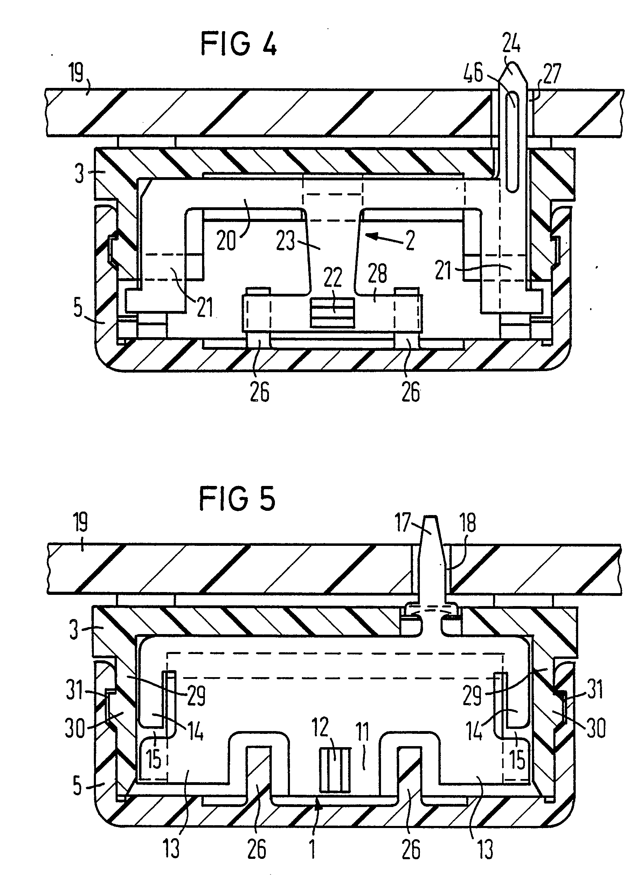

Als Kontaktfedern werden zwei Typen verwendet, die jeweils in Schächten 9 und 10 im Randbereich des Gehäuseunterteils 3 eingesteckt sind. In die Schächte 9 werden die feststehenden Kontaktfedern 1 (FIG 5) eingebracht, während zu beiden Seiten dieser feststehenden Kontaktfedern 1 die zu schaltenden Kontaktfedern 2 (FIG 4) angeordnet sind, die wiederum in den Schächten 10 untergebracht sind.

Wie FIG 5 zeigt, ist die feststehende Kontaktfeder 1 etwa U-förmig gestaltet und weist einen Mittelsteg 11 auf, der beidseitig einen Schaltkontakt 12 besitzt. In seinen äußeren Schenkeln 13 besitzt die Kontaktfeder 1 freigeschnittene Zungen 14, die aus der Ebene der Kontaktfeder 1 herausgebogen sind. Diese Zungen 14 liegen im eingesteckten Zustand der Kontaktfeder 14 an einer der Wände der die Schächte 9 bildenden Rippen 15 und 16 mit Preßsitz an, und sichern somit die Kontaktfeder innerhalb des Schachtes. Die Kontaktfeder 1 weist ferner einen Lötanschluß 17 auf, der durch eine Öffnung 18 in der Leiterplatte 19 hindurchgreift und z.B. mit entsprechenden Leiterbahnen verlötet werden kann.

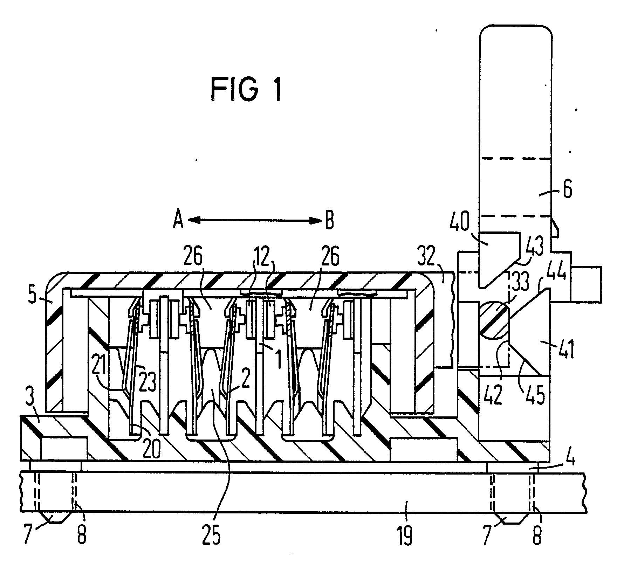

Wie die FIG 1 und 4 zeigen, besitzt die bewegbare Kontaktfeder 2 einen Basissteg 20, mit dem die Außenstege 21, der einseitig mit einem Schaltkontakt 22 versehene Mittelsteg 23 sowie der Lötanschluß 24 verbunden sind. Die Außenstege 21 sind im Bereich des Basissteges 20 stufenförmig aus dessen Ebene herausgebogen und liegen jeweils mit Preßsitz an den Wänden der durch die Rippe 15 bzw. 16 und dem Trennsteg 25 begrenzten Schächte an, während der Mittelsteg mit der den Schaltkontakt 22 aufweisenden Seite in Richtung auf die feststehende Kontaktfeder 1 gebogen ist und innerhalb der Schalteinrichtung frei beweglich angeordnet ist.

Der mit einer Sicke 46 versehene Lötanschluß 24 durchgreift wiederum eine Öffnung 27 in der Leiterplatte 19 und kann mit einer entsprechenden Leiterbahn verlötet werden. Aufgrund der Sicke 46 wird ein Preßsitz innerhalb der Öffnung 27 erzielt.

Jeweils eine feststehende Kontaktfeder 1 und zwei bewegbare Kontaktfedern 2 bilden einen Kontaktfedersatz. Im Mittelbereich des Gehäusedeckels sind in einer Fluchtlinie liegend Nockenpaare 26 vorgesehen, die pro Paar so zueinander angeordnet sind, daß ihr Abstand größer ist als die Breite des Mittelsteges 11 der Kontaktfeder 1 (FIG 5), während der in seinem Endbereich 28 T-förmig gestaltete Mittelsteg 23 der Kontaktfeder 2 an den Nockenpaaren 26 zur Anlage gelangt.

Der Gehäusedeckel 5 ist, wie bereits erwähnt, auf dem Gehäuseunterteil 3 verschiebbar geführt und gehaltert. Die Führung und Halterung wird bewirkt durch an zwei parallel zueinander verlaufenden Seitenwänden 29 angeordnete Nasen 30, die in entsprechende längliche Ausnehmungen 31 im Gehäusedeckel 5 eingreifen. Durch Aufsprengen des Gehäusedeckels 5 auf das Gehäuseunterteil 3 wird ein stabiler Sitz des Gehäusedeckels sowie eine einwandfreie Führung bei dessen Verschiebung in den Pfeilrichtungen A und B (FIG 1) erreicht.

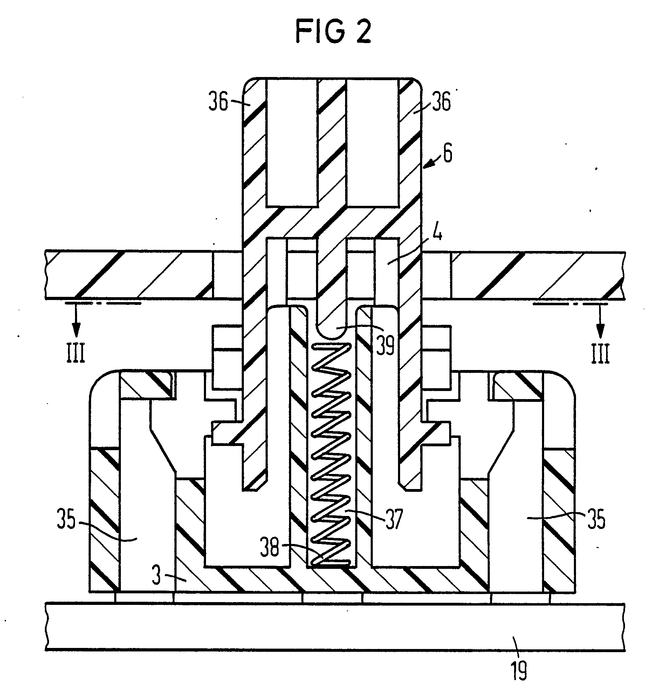

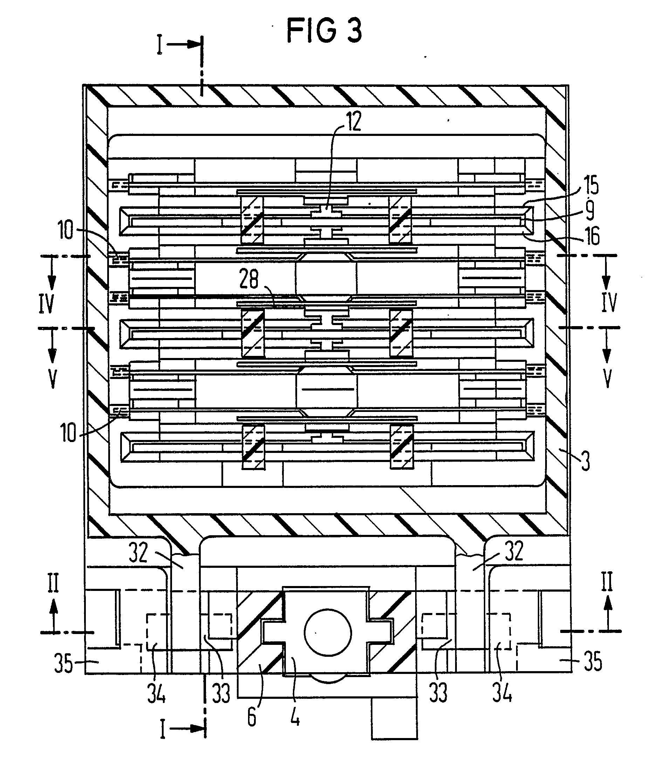

Der Gehäusedeckel 5 wird durch den auf der Schieberführung verschiebbar gelagerten Schieber 6 betätigt. Zu diesem Zweck weist der Gehäusedeckel in seinem dem Schieber zugewandten Bereich zwei Schaltstege 32 auf, in deren Endbereichen einmal dem Schieber 6 zugewandte Schaltnocken 33 angeordnet sind, während jeweils der dem Schieber 6 abgewandte Bereich Führungsnocken 34 besitzt, die in schachtartige Kammern 35 eingreifen. Diese Kammern 35 sind einstückig mit dem Gehäuseunterteil 3 verbunden und begrenzen den Verschiebeweg des Gehäusedeckels (FIG 3). Wie die FIG 2 darstellt, ist der Schieber 6 kastenförmig gestaltet und umgreift mit seinen Außenwänden 36 die konturmäßig entsprechend ausgebildete Schieberführung 4. Die Schieberführung 4 besitzt eine schachtartige Vertiefung 37, die zur Aufnahme eines Federelementes 38, z.B. einer Schraubenfeder dient. In die Vertiefung 37 greift ein am Schieber 6 vorgesehener Stift 39 ein, der an der Schraubenfeder 38 zur Anlage gelangt.

Wie aus der FIG 1 ersehbar ist, sind mit der Schalteinrichtung drei Schaltstellungen realisierbar, die durch Einwirken von Keilflächen 40 und 41 auf die Schaltnocke 33 der Schaltstege 32 zustandekommen. Bei der hier gezeigten Mittelstellung, bei der die Schaltnocke 33 auf dem geraden Abschnitt 42 der Keilfläche 41 zur Anlage gelangt, liegen alle bewegbaren Kontaktfedern 2 mit ihrem Schaltkontakt 22 an dem Schaltkontakt 11 der feststehenden Kontaktfedern 1 an. Wird der Schieber 6 entgegen der Kraft des Federelements 38 niedergedrückt, so wird der Gehäusedeckel 5 durch die auf den Schaltnocken 33 einwirkenden schrägen Abschnitte 43 und 44 der Keilflächen 40 und 41 in Pfeilrichtung B verschoben. Dabei drücken jeweils die Nockenpaare 26 auf die in der Bildebene links von den Kontaktfedern 1 befindlichen Mittelstege 23 der Kontaktfedern 2 und heben diese von den Mittelstegen 11 der Kontaktfedern 1 ab, daß ein zweiter Schaltzustand erzielt wird. Der dritte Schaltzustand wird durch Bewegung des Schiebers in der Bildebene nach oben erzielt. Bei dieser Bewegung trifft der Schaltnocken auf den schrägen Abschnitt 45 der Keilfläche 42, wobei der Gehäusedeckel in Pfeilrichtung A verschoben wird. Hierbei werden die in der Bildebene rechts von den Mittelstegen 11 der Kontaktfedern 1 befindlichen Mittelstege 23 der Kontaktfedern 2 abgehoben. Da die Mittelstege 23 der Kontaktfedern 2 leicht in Richtung auf die Mittelstege 11 der Kontaktfedern 1 vorgebogen sind, wird beim Abheben der Mittelstege 23 aufgrund der fest eingespannten Außenstege 21 der Basissteg tordiert, so daß eine Rückstellkraft für den bewegbaren Mittelsteg 23 erzeugt wird. Dadurch können die Betätigungskräfte für den Schieber relativ klein gehalten werden, da sich die abgehobenen Mittelstege aufgrund der tordierten Basisstege bei Betätigung des Schiebers in die entgegengesetzte Richtung von selbst in die Richtung der Mittelstege 11 der Kontaktfedern 1 kippen. Die Kraft zur Verschiebung des Gehäusedeckels ist durch die Gestaltung der Keilflächen in bestimmten Grenzen beeinflußbar, da die schrägen Abschnitte der Keilflächen durch eine flachere oder steilere Ausbildung den Verschiebeweg bestimmen.

## Ansprüche

1. Schalteinrichtung für elektrische Geräte mit zumindest einem in einem Gehäuseunterteil (3) in Schächten (9, 10) untergebrachten Kontaktfedersatz und einem auf das Gehäuseunterteil (3) aufgebrachten Gehäusedeckel (5), wobei der Kontaktfedersatz aus zumindest einer feststehenden (1) und einem bewegbaren (2) Kontaktfeder besteht und durch den Gehäusedeckel (5) betätigt wird, **dadurch gekennzeichnet**, daß die bewegbare Kontaktfeder (2) durch an einem Basissteg (20) angeordnete Außenstege (21) und einem zwischen diesen Außenstegen (21) vorgesehenen und den Schaltkontakt (22) in dessen Endbereich (28) aufweisenden Mittelsteg (23) gebildet ist, wobei nur die Außenstege (21) in Schächten (10) des Gehäuseunterteils (3) eingespannt gehalten sind und daß der bewegbare Mittelsteg (23) in Richtung auf die feststehende Kontaktfeder (1) vorgespannt und durch den senkrecht auf seinen freien Endbereich (28) einwirkenden und auf dem Gehäuseunterteil (3) verschiebbar geführten und gehaltenen Gehäusedeckel (5) betätigt wird.

2. Schalteinrichtung nach Anspruch 1, **dadurch gekennzeichnet**, daß die Verschiebung des Gehäusedeckels (5) durch einen mit ihm verbundenen Schieber (6) erfolgt.

3. Schalteinrichtung nach Anspruch 2, **dadurch gekennzeichnet**, daß der Gehäusedeckel (5) Schaltstege (32) mit in deren Endbereich angeordneten Schaltnocken (33) besitzt, die mit Keilflächen (40, 41) am Schieber (6) zusammenarbeiten.

4. Schalteinrichtung nach Anspruch 1, **dadurch gekennzeichnet**, daß der Gehäusedeckel (5) eine der Anzahl der zu schaltenden Kontaktfedern (2) entsprechende Anzahl von Nockenpaaren (26) aufweist, die jeweils auf den T-förmig gestalteten Endbereich (28) des Mittelsteges (23) der Kontaktfeder (2) einwirken.

5. Schalteinrichtung nach Anspruch 1, **dadurch gekennzeichnet**, daß die feststehende Kontaktfeder (1) im wesentlichen U-förmig gestaltet ist und einen zumindest einseitig mit einem Schaltkontakt (12) versehenen Mittelsteg (11) besitzt, wobei die Kontaktfedern (1) in den äußeren Schenkeln (13) freigeschnittene Zungen (14) besitzt, die aus der Ebene der Kontaktfedern (1) herausgebogen sind.

6. Schalteinrichtung nach Anspruch 1, **dadurch gekennzeichnet**, daß die Außenstege (21) der Kontaktfeder (2) im Bereich des Basissteges (20) stufenförmig aus dessen Ebene herausgebogen sind.

7. Schalteinrichtung nach Anspruch 1, **dadurch gekennzeichnet**, daß das Gehäuseunterteil (3) an zwei parallel zueinander verlaufenden Seitenwänden (29) angeordnete Nasen (30) aufweist, die in entsprechende am Gehäusedeckel (5) vorgesehene längliche Ausnehmungen (31) eingreifen.

8. Schalteinrichtung nach Anspruch 1, **dadurch gekennzeichnet,** daß das Gehäuseunterteil (3) einstückig mit ihm verbundene schachtartige Kammern (35) aufweist, in die an den Schaltstegen (33) des Gehäusedeckels (5) angeordnete und vom Schieber (6) abgewandte Führungsnocken (34) eingreifen.

# FIG 1

# FIG 2

FIG 3

## FIG 4

## FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 068 483 (SIEMENS) <br> * Seite 10, Zeile 9 - Seite 17, Zeile 2; Figuren * <br> --- | 1-5 | H 04 M 1/08 <br> H 01 H 13/12 |
| A | US-A-4 255 634 (VONIER) <br> * Spalte 2, Zeile 66 - Spalte 5, Zeile 45; Figuren * <br> --- | 1 | |
| A | FR-A-2 375 707 (ERICSSON) <br> * Seite 2, Zeile 32 - Seite 6, Zeile 16; Figuren * <br> ----- | 1,5 | |

RECHERCHIERTE
SACHGEBIETE (Int. Cl.4)

H 04 M
H 04 H

Der vorliegende Recherchenbericht wurde für alle Patentansprüche erstellt

| Recherchenort | Abschlußdatum der Recherche | Prüfer |
|---|---|---|
| DEN HAAG | 20-03-1989 | KEPPENS P.M.R. |